# EUROPÄISCHE PATENTSCHRIFT

(11) **EP 1 797 346 B1**
(45) Veröffentlichungstag und Bekanntmachung des Hinweises auf die Patenterteilung: **29.10.2008**
(21) Anmeldenummer: 05792042.3
(22) Anmeldetag: 28.09.2005
(51) Int. Cl.: F16F 9/05, B60G 11/28

(54) **LUFTFEDER MIT EINEM KUGELGELENK**
PNEUMATIC SPRING COMPRISING A BALL JOINT
AMORTISSEUR PNEUMATIQUE COMPRENANT UNE ROTULE

(30) Priorität: 07.10.2004 DE 102004048828
(43) Veröffentlichungstag der Anmeldung: 20.06.2007
(73) Patentinhaber: ZF Friedrichshafen AG, 88046 Friedrichshafen (DE)
(72) Erfinder: KOLB, Wolfgang, 97440 Werneck (DE); GEYER, Ulrich, 97456 Dittelbrunn (DE); LOESCHE, Christian, 32351 Stemwede (DE); RICHTER, Reinhard, 49163 Bohmte (DE); BRUNNEKE, Hans-Gerd, 49124 Georgsmarienhütte (DE)
(86) Internationale Anmeldenummer: PCT/EP2005/010463
(87) Internationale Veröffentlichungsnummer: WO 2006/040011

(56) Entgegenhaltungen:
- DE-A1- 19 717 892
- DE-A1- 19 959 839

## Beschreibung

### Technisches Gebiet

Die Erfindung betrifft eine Luftfeder gemäß dem Oberbegriff von Patentanspruch 1.

### Stand der Technik

Die DE 199 59 839 A1 zeigt in der Fig. 6 eine Luftfeder, deren Rollbalg an einem Abrollrohr befestigt ist. Zwischen einem Basisteil, in diesem Fall einem Schwingungsdämpfer und dem Abrollrohr ist ein Kugelgelenk angeordnet. Das Kugelgelenk besteht aus einem sphäroidischen Lagerelement, das in einer zweiteiligen Lagerschale angeordnet ist. Zwischen den beiden Lagerschalenhälften ist eine Dichtung gekammert, die einen Federraum der Luftfeder verschließt.

Bei diesem Kugelgelenk führen Maßabweichungen zu einer erhöhten inneren Reibung oder im anderen Extremfall zu Geräuschbildung und einer Undichtigkeit, da die Dichtung zwischen den Lagerschalen nicht ausreichend vorgespannt wird.

Aufgabe der vorliegenden Erfindung ist es, ein Kugelgelenk, insbesondere für eine Luftfeder derart weiterzuentwickeln, dass die aus dem Stand der Technik bekannten Probleme hinsichtlich der Reibung und der Dichtheit behoben sind.

### Darstellung der Erfindung

Erfindungsgemäß wird die Aufgabe dadurch gelöst, dass die Lagerschale mit einem Spannelement auf das sphäroidische Lagerelement einstellbar ist.

Ein Lagerspiel zwischen der Lagerschale und dem sphäroidischen Lagerelement können exakt auf ein gewünschtes Maß eingestellt werden, so dass das Reibungsproblem gelöst ist.

In konstruktiver Ausgestaltung der Erfindung weist die Lagerschale außenseitig eine konische Spannfläche auf, an der das Spannelement angreift. Das Spannelement übt bei einer axialen Spannbewegung eine Durchmesserreduzierung an der Lagerschale aus.

Damit die Lagerschale gleichmäßig radial vorgespannt wird, wird das Spannelement von einem Spannring gebildet. Das Spannelement stützt sich an einer Gegenhalterhülse ab und ist deshalb selbst sehr gut zentriert.

Das sphäroidische Lagerelement, die Lagerschale, der Spannring und die Gegenhalterhülse bilden eine in sich geschlossene Baueinheit, da die Gegenhalterhülse mit einer weiteren Spannfläche der Lagerschale zusammenwirkt, die bezogen auf den Äquator des sphäroidischen Lagerelements der ersten Spannfläche gegenüber liegt.

Zur stufenlosen Einstellbarkeit der Lagerschale besteht zwischen dem Spannelement und der Gegenhalterhülse eine Gewindeverbindung.

Die Lagerschale ist elastisch ausgeführt, so dass die Stellkräfte, die auf das Spannring ausgeübt werden müssen, im Rahmen bleiben. Sollte sich z. B. durch eine Erwärmung des Kugelgelenks eine erhöhte Reibung einstellen, dann kann man den Spannring wieder etwas lösen, wobei die Lagerschale aufgrund der Eigenelastizität einen entsprechend angepasste Konturenverlauf annimmt.

Des weiteren ist die Lagerschale einteilig ausgeführt. Mit der Einteiligkeit wird ein erheblicher Fertigungsvorteil erreicht. Man schiebt die Lagerschale über das sphäroidische Lagerelement, die anschließend nicht mehr aus auseinanderfallen können.

Damit auch tendenziell unelastische Werkstoffe für die Lagerschale eingesetzt werden können, ist die Lagerschale geschlitzt ausgeführt. Man kann alternativ einen längs verlaufenden Schlitz vorsehen oder mehrere Schlitze, die sich von einem Ende der Lagerschale z. B. bis über den Äquator des sphäroidischen Lagerelements erstrecken.

In weiterer vorteilhafter Ausgestaltung trennt eine Dichtung den Federraum von der Lagerschale. Die Vorspannung der Lagerschale ist demnach unabhängig von der Vorspannung der Dichtung, so dass keine Zielkonflikte zwischen Lagerspiel und Dichtheit der Luftfeder auftreten können.

Dabei ist die Dichtung als eine Lippendichtung ausgeführt, die abhängig vom Druck innerhalb des Federraums auf das sphäroidischen Lagerelement vorgespannt wird. Die Dichtung ist zwischen dem Abrollrohr und der Gegenhalterhülse axial fixiert, so dass für die Dichtung keine besondere Dichtungsnut in das Abrollrohr eingearbeitet werden muss.

Die Gegenhalterhülse wird vom Abrollrohr radial gehalten und ist mit einem Sicherungsring am Abrollrohr axial fixiert. Bei der Montage muss die Baueinheit des Kugelgelenks einfach in das Abrollrohr eingeschoben und mit dem besagten Sicherungsring befestigt werden.

Gemäß einer vorteilhaften Anwendung wird das Basisteil von einem Schwingungsdämpfer gebildet, der das sphäroidische Lagerelement durchdringt.

Das Kugelgelenk wird einfach auf das Basisteil aufgesteckt. Um keine Leckagen auftreten zu lassen, ist zwischen dem Basisteil und dem sphäroidischen Lagerelement eine Dichtung angeordnet.

Das Einstellen des Lagerspiels innerhalb des Kugelgelenks soll möglichst einfach und schnell vorgenommen werden. Des weiteren sollen dabei keine Beschädigungen auftreten. Deshalb ist das Spannelement mit Verdrehwerkzeugflächen ausgeführt.

Für die Anwendung des Kugelgelenks mit einer Luftfeder könnten bei einem Fahrzeugschmutzpartikel in das Kugelgelenk eindringen. Damit dieser Fall bei dem erfindungsgemäßen Kugelgelenk nicht auftreten kann, wird es von einem Schutzbalg abgedeckt.

Sollte in einem Reparaturfall eine Demontage des Kugelgelenks notwendig sein, so kann ein Schutzbalgende, das an dem Spannring befestigt ist, sehr leicht entfernt werden, um einen freien Zugang zum Kugelgelenk herzustellen. Eine einfache Federklemme hält das Schutzbalgende an dem Spannring fest.

### Kurze Beschreibung der Zeichnungen

Anhand der folgenden Figurenbeschreibung soll die Erfindung näher erläutert werden.

Es zeigt:
- Fig. 1: Luftfeder mit Schwingungsdämpfer in Gesamtansicht
- Fig. 2: Kugelgelenk als Baugruppe in Schnittdarstellung
- Fig. 3 u. 4: Ansichten von der Lagerschale des Kugelgelenks

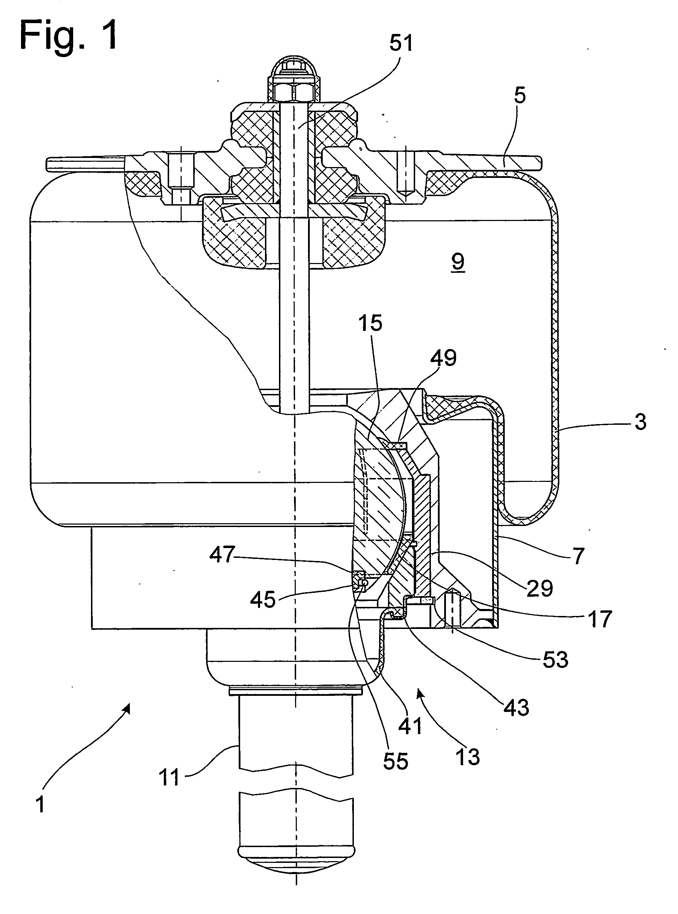

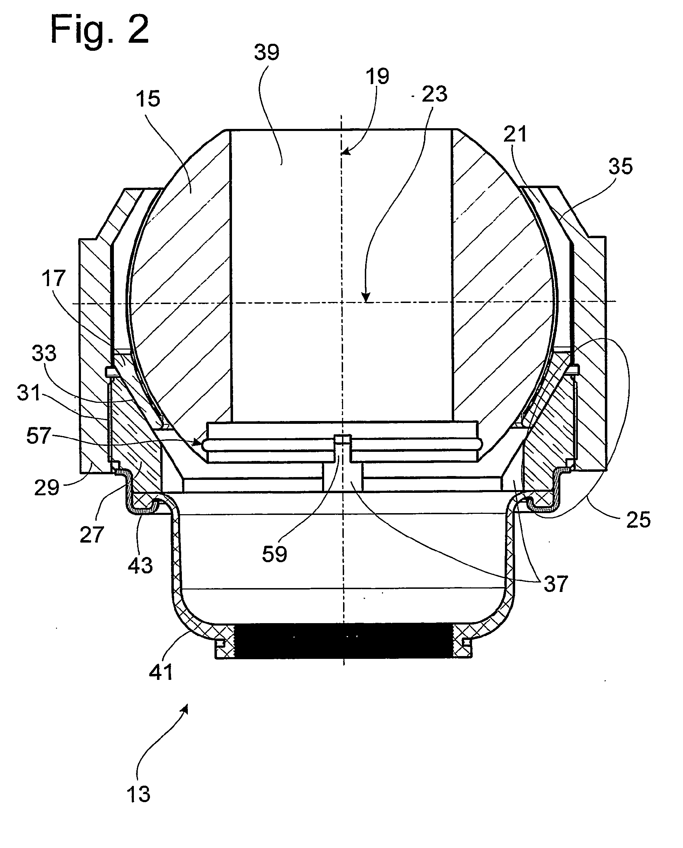

Die Figur 1 zeigt eine Luftfeder 1 mit einem Rollbalg 3, dessen oberes Ende sich an einer Anschlussplatte 5 abstützt. Das andere Ende des Rollbalgs ist an einem Abrollrohr 7 befestigt. Der Rollbalg und das Abrollrohr begrenzen einen Federraum 9, der mit einer nicht dargestellten Druckluftversorgung verbunden ist. Zwischen dem Abrollrohr 7 und einem Basisteil in der Ausgestaltung eines bekannten Schwingungsdämpfers 11 ist ein Kugelgelenk 13 angeordnet, das als Baugruppe in der Fig. 2 dargestellt ist.

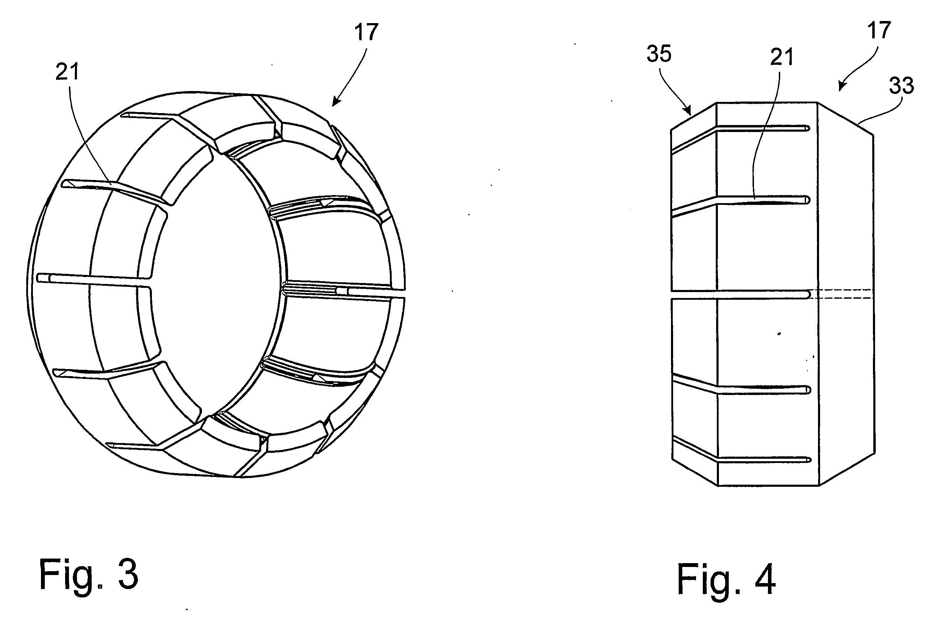

In der Fig. 2 ist erkennbar, dass das Kugelgelenk ein sphäroidisches Lagerelement 15 aufweist, das in einer Lagerschale 17 in Umfangsrichtung Drehbewegungen und bezogen auf eine Längsachse 19 auch Schwenkbewegungen des sphäroidischen Lagerelements ermöglicht. Die Lagerschale 17 ist einteilig ausgeführt, wie aus den Fig. 3 und 4 erkennbar ist. Des weiteren ist die Lagerschale insbesondere radial elastisch, um bei der Montage über das sphäroidische Lagerelement 15 gedrückt werden zu können. Die Lagerschale verfügt über Schlitze 21, die sich vom oberen Ende bis über ein Äquator 23 (s. Fig. 2) erstrecken. Alternativ kann man auch einen einzelnen durchgehenden Schlitz vorsehen, wie es beispielhaft mit der gestrichelten Linie dargestellt ist.

Die Lagerschale 17 ist mit einem Spannelement 25 auf das sphäroidische Lagerelement 15 einstellbar. Das Spannelement 25 wird u. a. von einem Spannring 27 gebildet, der sich an einer Gegenhalterhülse 29 abstützt. Zwischen dem Spannelement bzw. Spannring 27 und der Gegenhalterhülse 29 besteht eine Gewindeverbindung 31, die eine stufenlose axiale Verschiebebewegung des Spannrings zur Gegenhalterhülse ermöglicht. Außenseitig verfügt die Lagerschale 17 über eine konische erste Spannfläche 33 (s. auch Fig. 4), an der der Spannring 27 angreift. Die Gegenhalterhülse 29 wirkt mit einer weiteren Spannfläche 35 der Lagerschale 17 zusammen, die bezogen auf den Äquator 23 des sphäroidischen Lagerelements 15 der ersten Spannfläche 33 gegenüberliegt.

Das sphäroidische Lagerelement 15, die Lagerschale 17, der Spannring 27 und die Gegenhalterhülse 29 bilden als Kugelgelenk eine in sich geschlossene Baugruppe, die in diesem Montagezustand einstellbar ist. Dazu verfügt der Spannring über Verdrehwerkzeugflächen 37, die eine Verdrehbewegung des Spannrings zur Gegenhalterhülse erleichtern. Dabei werden die beiden Spannflächen 33; 35 von dem Spannring und der Gegenhalterhülse in Richtung des sphäroidischen Lagerelements 15 verformt, wodurch das Kugelgelenk in seinem Lagerspiel exakt einstellbar ist.

Das sphäroidische Lagerelement verfügt über eine Durchgangsöffnung 39 zur Aufnahme des Schwingungsdämpfers 11 (Fig. 1). In Richtung des Schwingungsdämpfers wird das Kugelgelenk von einem Schutzbalg 41 abgedeckt, der mit seinem Schutzbalgende an dem Spannring 27 mittels eines Klemmrings 43 befestigt ist.

Die besagte Baueinheit wird bei der Montage der Luftfeder auf den Schwingungsdämpfer 11 gefädelt. Am Schwingungsdämpfer 11 ist ein Winkelring 45 befestigt, wobei zwischen dem sphäroidischen Lagerelement 15 und dem Basisteil 11 bzw. dem Winkelring als Anbauteil des Schwingungsdämpfers eine Dichtung 47 angeordnet ist, die eine Leckage zwischen dem Kugelgelenk 13 und dem Schwingungsdämpfer verhindert. In einem weiteren Montageschritt wird stirnseitig auf die Gegenhalterhülse 29 eine Dichtung 49 aufgelegt, die den Federraum 9 und die Lagerschale 17 trennt. Die Dichtung 49 ist als eine Lippendichtung ausgeführt, die abhängig vom Druck innerhalb des Federraums 9 auf dem sphäroidischen Lagerelement 15 vorgespannt wird.

Danach wird das Abrollrohr 7 aus der Richtung einer Kolbenstange 51 des Schwingungsdämpfers 11 auf die Gegenhalterhülse 29 geschoben, so dass die Dichtung 49 zwischen dem Abrollrohr 7 und der Gegenhalterhülse 29 axial fixiert ist. Die Gegenhalterhülse wiederum wird vom Abrollrohr radial gehalten und ist mit einem Sicherungsring 53 axial fixiert.

Damit der Schwingungsdämpfer 11 nicht aus dem Kugelgelenk 13 herausfallen kann, ist zwischen dem Winkelring 45 und dem sphäroidischen Lagerelement 15 ein Sicherungsring 55 in einer Nut 57 (Fig. 2) gekammert. Zur Demontage des Sicherungsrings 55 ist in der Nut 57 ein axial verlaufender Schlitz 59 ausgeführt, der den Zugang für ein Werkzeug, das den Sicherungsring aus der Nut 57 drückt, ermöglicht. Abschließend wird der Schutzbalg 41 montiert und mit dem Klemmring fixiert.

Das nun vorliegende Luftfeder-Schwingungsdämpfer-Modul kann aufgrund des eingesetzten Kugelgelenks mit einem optimalen Lagerspiel reibungsarm und trotzdem druckdicht kardanische Bewegungen z. B. zwischen einer Fahrzeugachse und einem Fahrzeugaufbau ausgleichen.

## Patentansprüche

1. Luftfeder (1), umfassend einen Rollbalg (3), der an einem Abrollrohr (7) befestigt ist und damit einen Federraum (9) bildet, wobei das Abrollrohr (7) mit einem Basisteil (11) über ein Kugelgelenk (13) verbunden ist, das ein sphäroidische (5) Lagerelement (15) in einer Lagerschale (17) aufweist,
**dadurch gekennzeichnet,**
**dass** die Lagerschale (17) mit einem Spannelement (25) auf das sphäroidische Lagerelement (15) einstellbar ist.

2. Luftfeder nach Anspruch 1,
**dadurch gekennzeichnet,**
**dass** die Lagerschale (17) außenseitig eine konische Spannfläche (33) aufweist, an der das Spannelement (25) angreift.

3. Luftfeder nach Anspruch 1,
**dadurch gekennzeichnet,**
**dass** Spannelement (25) von einem Spannring (27)gebildet wird.

4. Luftfeder nach Anspruch 1,
**dadurch gekennzeichnet,**
**dass** sich das Spannelement (25) an einer Gegenhalterhülse abstützt.

5. Luftfeder nach Anspruch 4,
**dadurch gekennzeichnet,**
**dass** die Gegenhalterhülse (29) mit einer weiteren Spannfläche (35) der Lagerschale (17) zusammenwirkt, die bezogen auf den Äquator (23) des sphäroidischen Lagerelements (15) der ersten Spannfläche (33) gegenüber liegt.

6. Luftfeder nach Anspruch 4,
**dadurch gekennzeichnet,**
**dass** zwischen dem Spannelement (27) und der Gegenhalterhülse (29) eine Gewindeverbindung (31) besteht.

7. Luftfeder nach Anspruch 1,
**dadurch gekennzeichnet,**
**dass** die Lagerschale (17) elastisch ausgeführt ist.

8. Luftfeder nach Anspruch 7,
**dadurch gekennzeichnet,**
**dass** die Lagerschale (17) einteilig ausgeführt ist.

9. Luftfeder nach Anspruch 7,
**dadurch gekennzeichnet,**
**dass** die Lagerschale (17) geschlitzt ausgeführt ist.

10. Luftfeder nach Anspruch 1,
**dadurch gekennzeichnet,**
**dass** eine Dichtung (49) den Federraum (9) von der Lagerschale (17) trennt.

11. Luftfeder nach Anspruch 10,
**dadurch gekennzeichnet,**
**dass** die Dichtung (49) als eine Lippendichtung ausgeführt ist, die abhängig vom Druck innerhalb des Federraums (9) auf das sphäroidischen Lagerelement (15) vorgespannt wird.

12. Luftfeder nach Anspruch 10,
**dadurch gekennzeichnet,**
**dass** die Dichtung (49) zwischen dem Abrollrohr (7) und der Gegenhalterhülse (29) axial fixiert ist.

13. Luftfeder nach Anspruch 4,
**dadurch gekennzeichnet,**
**dass** die Gegenhalterhülse (29) vom Abrollrohr (7) radial gehalten wird.

14. Luftfeder nach Anspruch 13,
**dadurch gekennzeichnet,**
**dass** die Gehalterhülse (29) mit einem Sicherungsring (53) am Abrollrohr (7) axial fixiert ist.

15. Luftfeder nach Anspruch 1,
**dadurch gekennzeichnet,**
**dass** das Basisteil von einem Schwingungsdämpfer (11) gebildet wird, der das sphäroidische Lagerelement (15) durchdringt.

16. Luftfeder nach Anspruch 1,
**dadurch gekennzeichnet,**
**dass** zwischen dem Basisteil (11) und dem sphäroidischen Lagerelement (15) Dichtung (47) angeordnet ist.

17. Luftfeder nach Anspruch 6,
**dadurch gekennzeichnet,**
**dass** das Spannelement (27) mit Verdrehwerkzeugflächen (37) ausgeführt ist.

18. Luftfeder nach Anspruch 1,
**dadurch gekennzeichnet,**
**dass** das Kugelgelenk (13) von einem Schutzbalg (41) abgedeckt wird.

19. Luftfeder nach Anspruch 18,
**dadurch gekennzeichnet,**
**dass** ein Schutzbalgende an dem Spannring (27) befestigt ist.

## Claims

1. Pneumatic spring (1), comprising a rolling bellows (3) which is fastened to an unrolling tube (7) and consequently forms a spring space (9), the unrolling tube (7) being connected to a base part (11) via a ball joint (13) which has a spheroidal bearing element (15) in a bearing shell (17), **characterized in that** the bearing shell (17) can be set onto the spheroidal bearing element (15) by means of a tension element (25).

2. Pneumatic spring according to Claim 1, **characterized in that** the bearing shell (17) has on the outside a conical tension face (33) on which the tension element (25) engages.

3. Pneumatic spring according to Claim 1, **characterized in that** the tension element (25) is formed by a tension ring (27).

4. Pneumatic spring according to Claim 1, **characterized in that** the tension element (25) is supported on an abutment sleeve.

5. Pneumatic spring according to Claim 4, **characterized in that** the abutment sleeve (29) cooperates with a further tension face (35) of the bearing shell (17), which further tension face lies opposite the first tension face (33) with respect to the equator (23) of the spheroidal bearing element (15).

6. Pneumatic spring according to Claim 4, **characterized in that** a threaded connection (31) is present between the tension element (27) and the abutment sleeve (29).

7. Pneumatic spring according to Claim 1, **characterized in that** the bearing shell (17) is designed elastically.

8. Pneumatic spring according to Claim 7, **characterized in that** the bearing shell (17) is formed in one piece.

9. Pneumatic spring according to Claim 7, **characterized in that** the bearing shell (17) is of slotted design.

10. Pneumatic spring according to Claim 1, **characterized in that** a seal (49) separates the spring space (9) from the bearing shell (17).

11. Pneumatic spring according to Claim 10, **characterized in that** the seal (49) is designed as a lip seal which is pretensioned onto the spheroidal bearing element (15) as a function of the pressure inside the spring space (9).

12. Pneumatic spring according to Claim 10, **characterized in that** the seal (49) is fixed axially between the unrolling tube (7) and the abutment sleeve (29).

13. Pneumatic spring according to Claim 4, **characterized in that** the abutment sleeve (29) is held radially by the unrolling tube (7).

14. Pneumatic spring according to Claim 13, **characterized in that** the abutment sleeve (29) is fixed axially on the unrolling tube (7) by means of a securing ring (53).

15. Pneumatic spring according to Claim 1, **characterized in that** the base part is formed by a vibration damper (11) which penetrates through the spheroidal bearing element (15).

16. Pneumatic spring according to Claim 1, **characterized in that** a seal (47) is arranged between the base part (11) and the spheroidal bearing element (15).

17. Pneumatic spring according to Claim 6, **characterized in that** the tension element (27) is formed with rotary tool faces (37).

18. Pneumatic spring according to Claim 1, **characterized in that** the ball joint (13) is covered by a protective bellows (41).

19. Pneumatic spring according to Claim 18, **characterized in that** one protective bellows end is fastened to the tension ring (27).

## Revendications

1. Ressort pneumatique (1) comprenant un soufflet roulant (3), qui est fixé à un tube de roulement (7) et forme ainsi un espace de ressort (9), le tube de roulement (7) étant connecté à une partie de base (11) par le biais d'une rotule (13), qui présente un élément de palier sphéroïde (15) dans une coque de palier (17),
**caractérisé en ce que**
la coque de palier (17) peut être ajustée avec un élément de serrage (25) à l'élément de palier sphéroïde (15).

2. Ressort pneumatique selon la revendication 1,
**caractérisé en ce que**
la coque de palier (17) présente du côté extérieur une surface de serrage conique (33), sur laquelle vient en prise l'élément de serrage (25).

3. Ressort pneumatique selon la revendication 1,
**caractérisé en ce que**
l'élément de serrage (25) est formé par une bague de serrage (27).

4. Ressort pneumatique selon la revendication 1,
**caractérisé en ce que**
l'élément de serrage (25) s'appuie sur une douille de contre-butée.

5. Ressort pneumatique selon la revendication 4,
**caractérisé en ce que**
la douille de contre-butée (29) coopère avec une autre surface de serrage (35) de la coque de palier (17), qui, par rapport à l'équateur (23) de l'élément de palier sphéroïde (15), est en regard de la première surface de serrage (33).

6. Ressort pneumatique selon la revendication 4,
**caractérisé en ce**
**qu'**il existe une connexion vissée (31) entre l'élément de serrage (27) et la douille de contre-butée (29).

7. Ressort pneumatique selon la revendication 1,
**caractérisé en ce que**
la coque de palier (17) est réalisée sous forme élastique.

8. Ressort pneumatique selon la revendication 7,
**caractérisé en ce que**
la coque de palier (17) est réalisée d'une seule pièce.

9. Ressort pneumatique selon la revendication 7,
**caractérisé en ce que**
la coque de palier (17) est réalisée sous forme fendue.

10. Ressort pneumatique selon la revendication 1,
**caractérisé en ce**
**qu'**un joint d'étanchéité (49) sépare l'espace de ressort (9) de la coque de palier (17).

11. Ressort pneumatique selon la revendication 10,
**caractérisé en ce que**
le joint d'étanchéité (49) est réalisé sous forme de joint à lèvre, qui est précontraint en fonction de la pression à l'intérieur de l'espace de ressort (9) sur l'élément de palier sphéroïde (15).

12. Ressort pneumatique selon la revendication 10,
**caractérisé en ce que**
le joint d'étanchéité (49) est fixé axialement entre le tube de roulement (7) et la douille de contre-butée (29).

13. Ressort pneumatique selon la revendication 4,
**caractérisé en ce que**
la douille de contre-butée (29) est maintenue radialement par le tube de roulement (7).

14. Ressort pneumatique selon la revendication 13,
**caractérisé en ce que**
la douille de contre-butée (29) est fixée axialement avec une bague de fixation (53) sur le tube de roulement (7).

15. Ressort pneumatique selon la revendication 1,
**caractérisé en ce que**
la partie de base est formée par un amortisseur d'oscillations (11) qui traverse l'élément de palier sphéroïde (15).

16. Ressort pneumatique selon la revendication 1,
**caractérisé en ce que**
l'on dispose un joint d'étanchéité (47) entre la partie de base (11) et l'élément de palier sphéroïde (15).

17. Ressort pneumatique selon la revendication 6,
**caractérisé en ce que**
l'élément de serrage (27) est réalisé avec des surfaces pour outil rotatif (37).

18. Ressort pneumatique selon la revendication 1,
**caractérisé en ce que**
la rotule (13) est recouverte par un soufflet de protection (41).

19. Ressort pneumatique selon la revendication 18,
**caractérisé en ce**
**qu'**une extrémité du soufflet de protection est fixée sur la bague de serrage (27).
